# EUROPEAN PATENT SPECIFICATION

(11) **EP 2 604 458 B1**
(45) Date of publication and mention of the grant of the patent: **09.04.2014**
(21) Application number: 12169995.3
(22) Date of filing: 14.12.2011
(51) Int. Cl.: B60J 5/04

(54) **Motor-vehicle door**
Kraftfahrzeugtür
Portière de véhicule à moteur

(43) Date of publication of application: 19.06.2013
(62) Divisional of application: 11193468.3
(73) Proprietor: C.R.F. Società Consortile per Azioni, 10043 Orbassano (Torino) (IT)
(72) Inventor: Storgato, Angelo, I-10043 Orbassano (Torino) (IT); Masoero, Giorgio, I-10043 Orbassano (Torino) (IT); Caroli, Andrea, I-10043 Orbassano (Torino) (IT); Biasotto, Marco, I-10043 Orbassano (Torino) (IT)
(74) Representative: Notaro, Giancarlo

(56) References cited:
- WO-A1-02/40318
- WO-A2-2006/124362
- JP-A- 2007 237 763

## Description

The present invention refers to the motor-vehicle doors industry and it regards an innovative door architecture.

A motor-vehicle door having the features indicated in the preamble of claim 1 is known from any of documents WO 02/40318 A1, JP 2007 237763 A, WO 2006/124362 A2.

The object of the present invention is to provide a motor-vehicle door structure that is robust and capable of guaranteeing the utmost safety of the driver and passengers in case of impact, simultaneously being considerably light and capable of guaranteeing extremely easy and quick manufacture, assembly and maintenance operations.

According to the main characteristic thereof, the door according to the invention comprises the features of claim 1.

Due to the aforementioned characteristics, the structure of the door according to the invention is constituted by a small number of components, it is lighter with respect to doors of this type made according to the known art and it guarantees both a high robustness as well as easy and quick manufacture and assembly operations.

Now, the invention will be described with reference to the attached drawings, provided purely by way of non-limiting example, wherein:
- figures 1-5 are perspective views showing the different assembly steps of a first embodiment of the door according to the invention,
- figures 6, 7 are views of some of the components of the door of figures 1-5,
- figure 8 is an enlarged scale and sectional view in a plane perpendicular to the general plane of the door of figures 1-7,
- figures 9-14 are detail perspective views and sectional views of some details regarding the connection between the various elements that form the door according to the invention, and
- figure 15 is a schematic perspective view of a second embodiment of the door which does not form part of the invention.

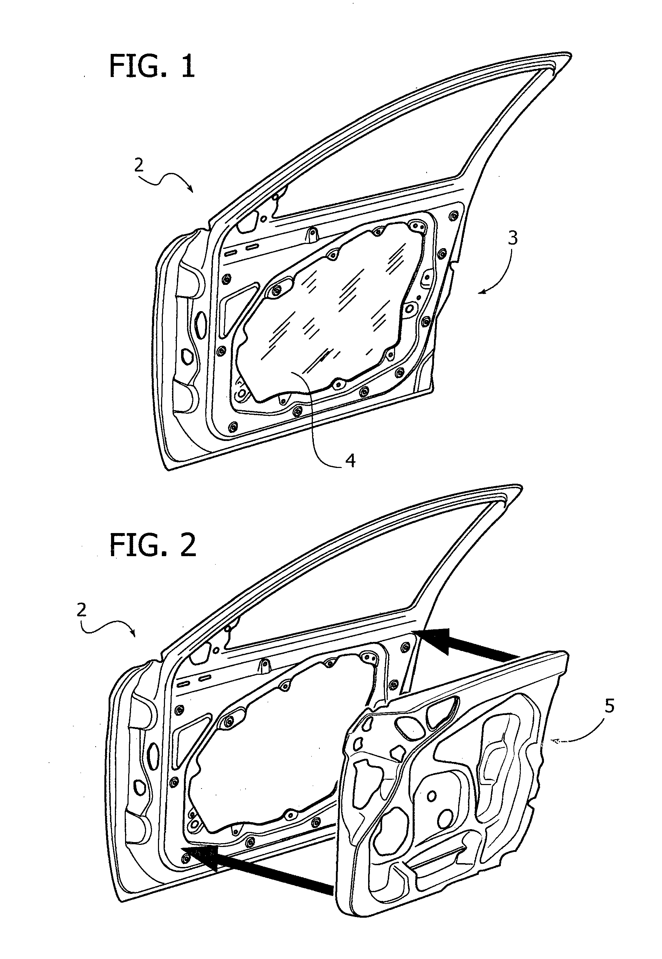

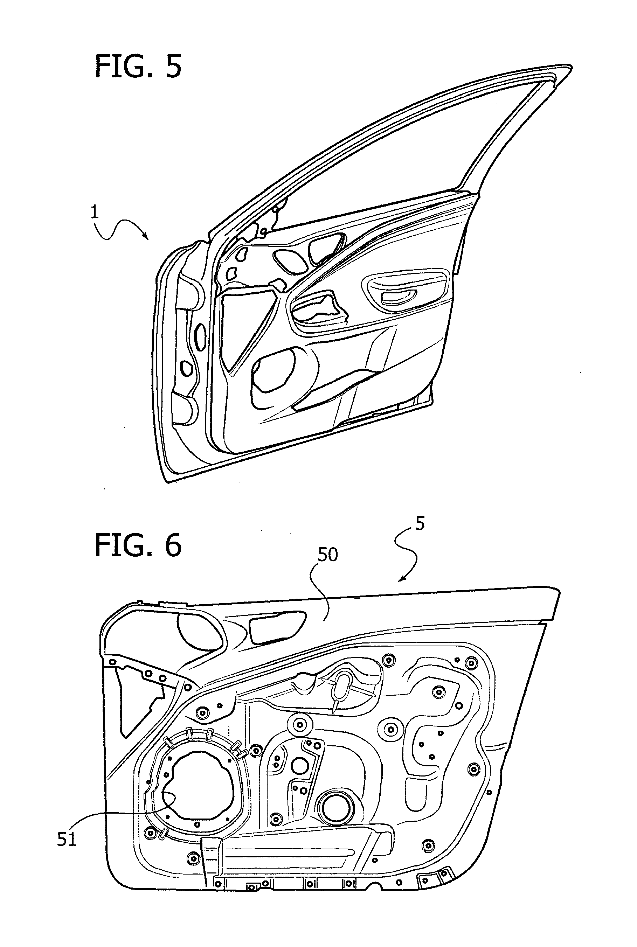

Figure 5 of the attached drawings shows - in perspective view - a first embodiment of a vehicle side door provided according to the principles of the present invention. In such figure, the door is indicated in its entirety with reference number 1. In the case of the illustrated example, the door 1 first and foremost comprises a metal sheet structure 2 (see figure 1) comprising an inner frame 3 and an outer panel 4 rigidly connected to each other, typically by means of welding.

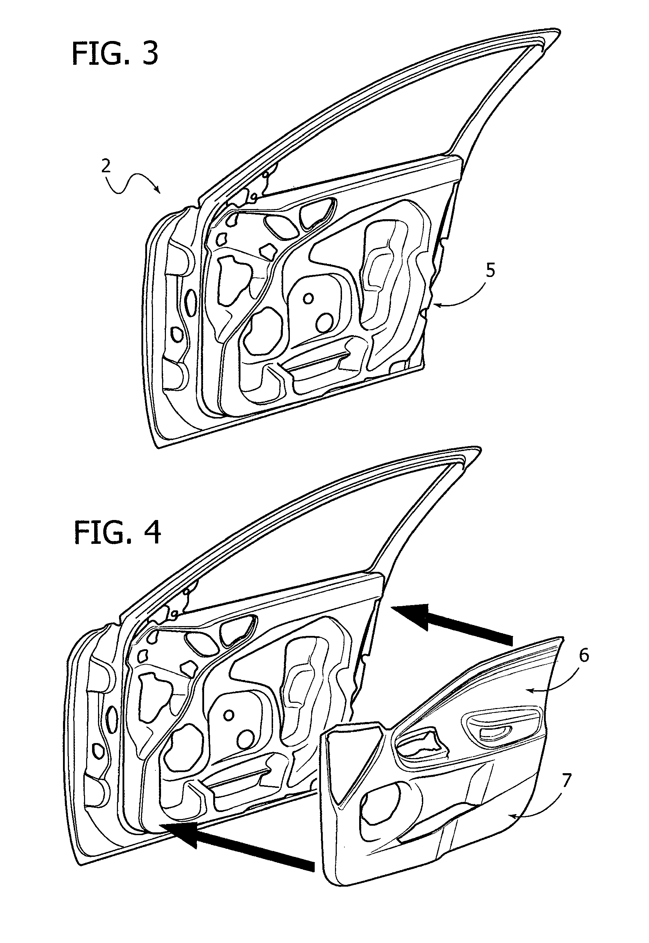

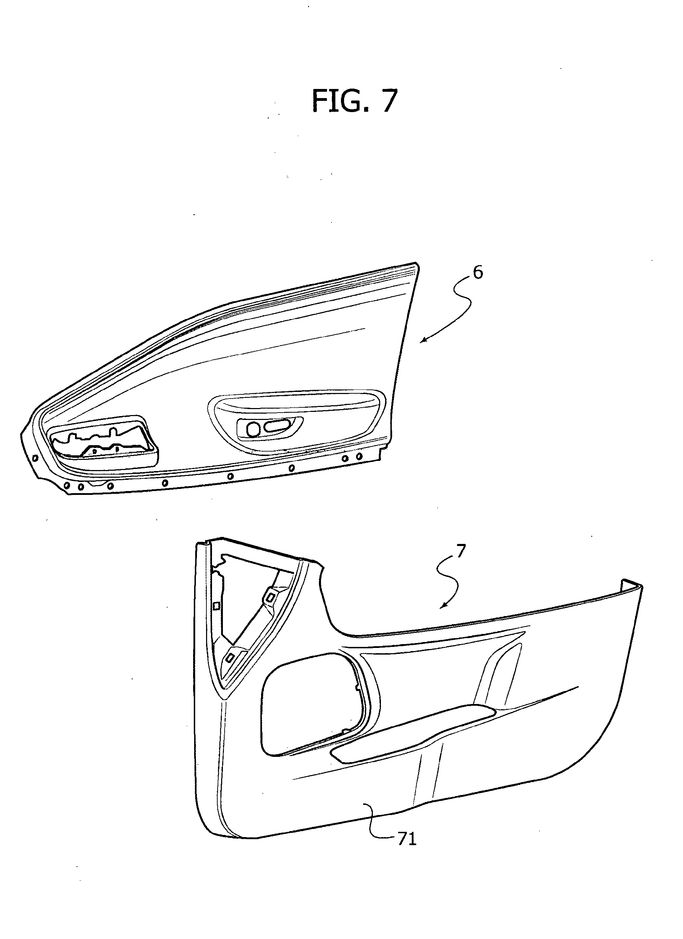

As observable in figure 2, a carrier 5 made of fibre-reinforced synthetic material, typically glass fibre but possibly even natural fibres such as juta, kenaf, etc, is fixed to the metal sheet structure 2, on the inner side thereof. The first function of the carrier 5 is to support a plurality of accessory members and devices of the door (such as for example a speaker, a power window or any other device). Figure 2 shows the metal sheet structure 2 and the carrier 5 in exploded view, while figure 3 shows such components assembled to each other. As observable in figure 4, after positioning the carrier 5, the inner side of the door is closed with a an inner trimming structure constituted by two synthetic material panels 6, 7 arranged one on the other. Figures 6, 7 show the carrier 5 and the trimming panels 6, 7 respectively.

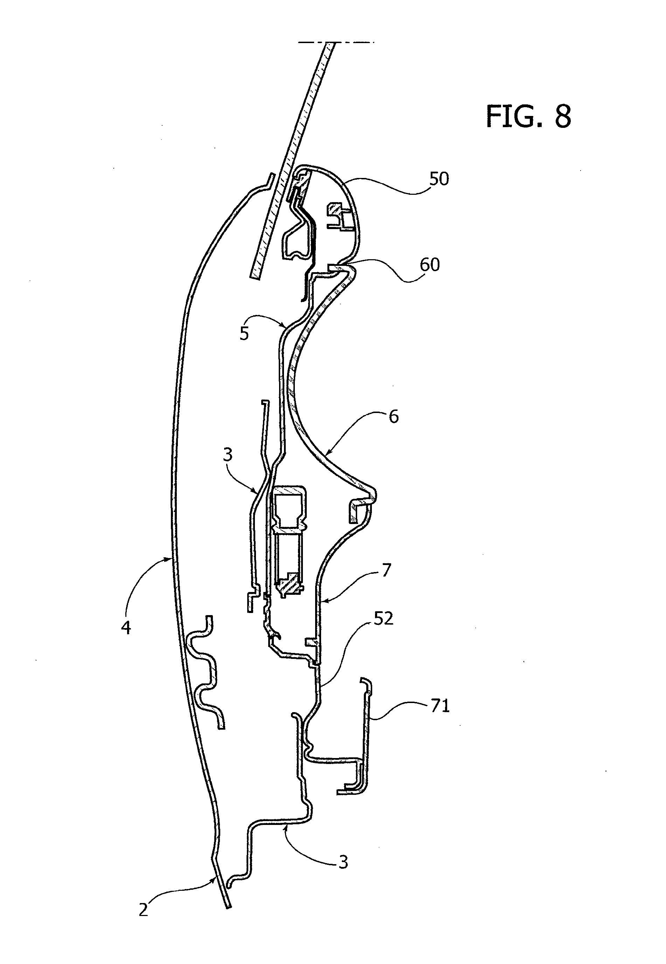

As clearly observable in figure 6, as well as in the section of figure 8 the carrier 5 has a portion 50 extending along the lower edge of the window and which is exposed to view, such portion 50 having a structure and a configuration such to directly serve the trimming function at such area. In order to guarantee the required aesthetic characteristics, the carrier 5 is manufactured using the technique that provides for two simultaneous injection moulding operations, one for the part 50, where the material is talc-filled polypropylene, and the other for the part underlying the portion 50, where the material is glass-fibre-filled polypropylene. The moulding of both the exposed portion 50 and the part underlying the portion 50 shall also be provided for using a single glass-fibre-filled plastic material.

In figure 6, the hole 51 obtained in the carrier 5 serves as a seat for mounting a speaker.

As observable also in figure 8, the carrier 5 also has a portion 52 exposed to view, which defines the inner wall of a pocket of the door, whose outer wall 71 is defined by the trimming panel 7. In the embodiment illustrated herein, the trimming panel 6 is for example made of the material referred to as "woodstok", while the trimming panel 7 is made of talc-filled polypropylene. In case of use of woodstok, a reinforcement (not illustrated) is preferably used for fixing the panel 6 to the carrier 5. Alternatively, the panel 6 may be made of thermoformed synthetic material, using the "one-shot back injection" technique. No reinforcement is required in this case.

The connections of the various components indicated above to each other may be obtained through any known method, for example through a "Pinetto" fastener.

In a variant, the panels 6, 7 are integrated in a single panel that can be obtained by means of a single thermoforming step.

The carrier 5 can be fixed to the frame 3 preferably using screws and/or rivets, preferably also with the help anti-vibration pads.

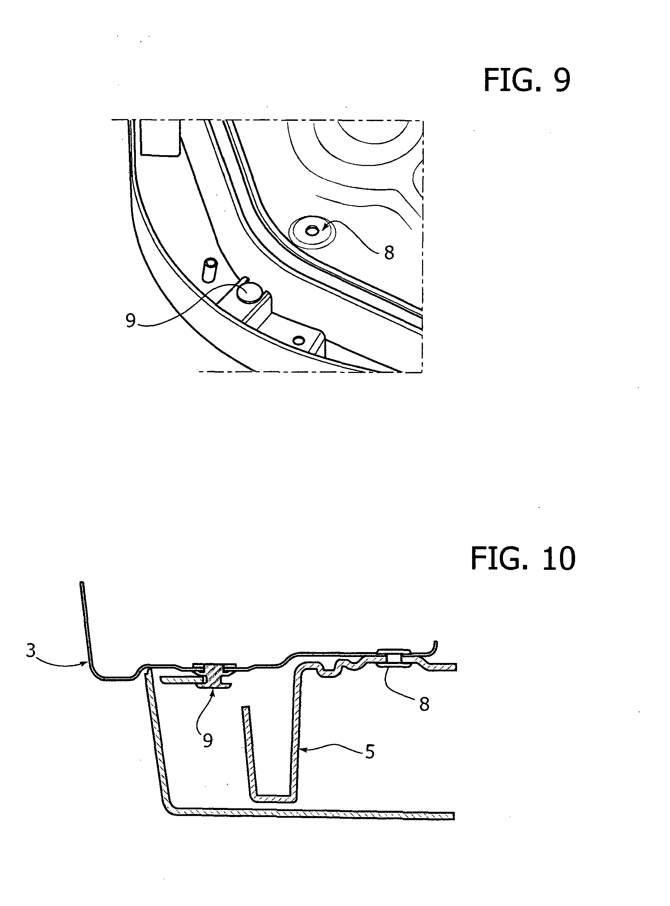

Figure 9 shows a rivet 8 and an anti-vibration pad 9.

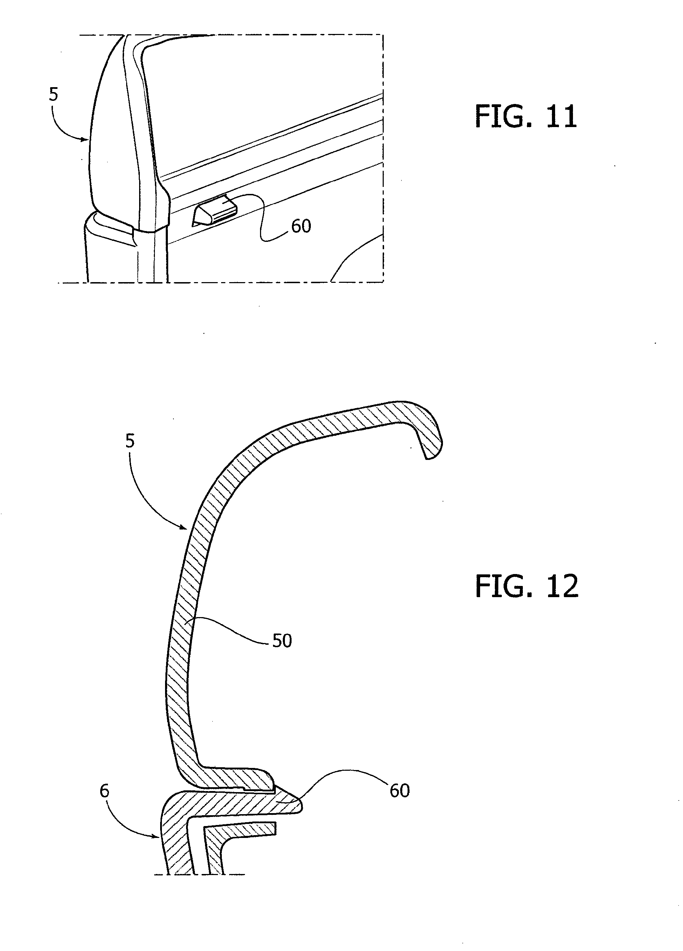

Still with reference to figure 8 and figures 11, 12, the trimming panel 6 has - along the upper edge thereof - teeth 60 which are snap-received within corresponding openings obtained by moulding in the structure of the carrier 5.

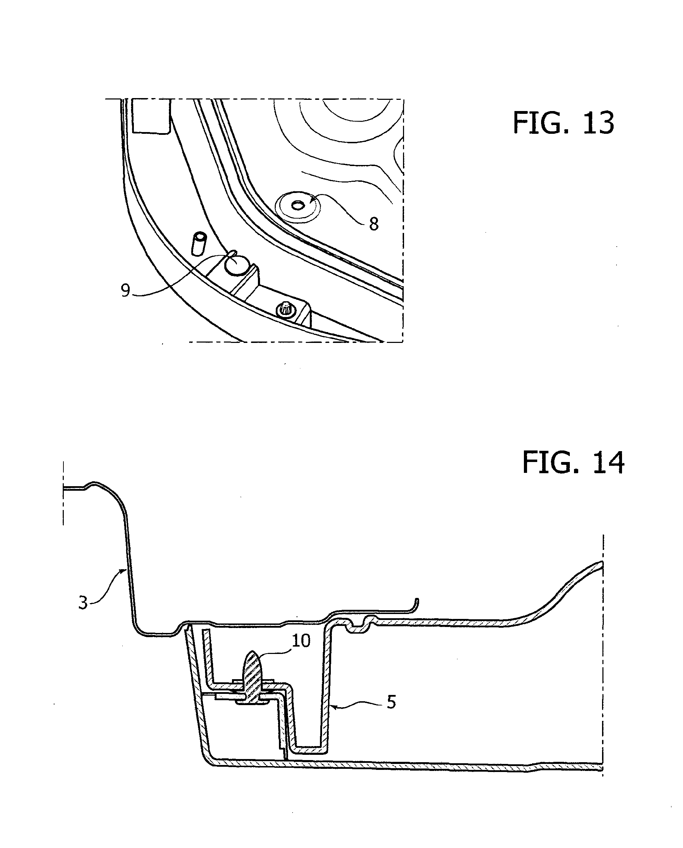

Figures 13, 14 illustrate a variant in which, besides the rivets 8 and the anti-vibration pads 9 used for fixing the carrier 5 on the inner frame 3, Pinetto fasteners 10 are used for fixing the trimming panels 6, 7 to the carrier 5.

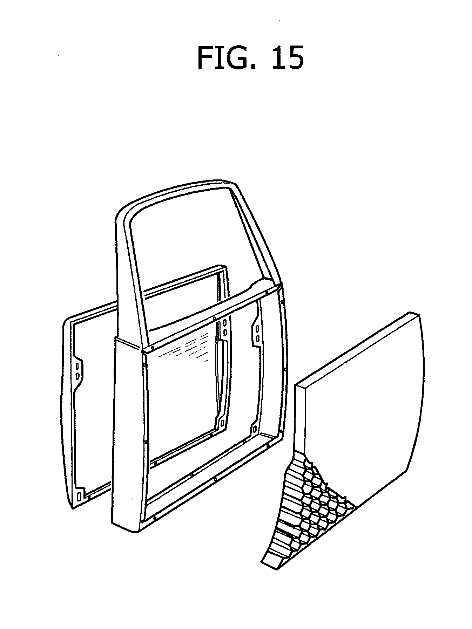

Figure 15 of the attached drawings shows a second embodiment not forming part of the invention, in which the inner frame 3 of the door comprises a metal sheet structure constituted by one or more elements connected to each other and defining a C-sectioned continuous beam forming a quadrangular framework, with an upper crosspiece 30, a lower crosspiece 31 and two uprights 32, 33. In the case of the door with frameless window, the frame is limited to the structure described above. In the case of the frame-equipped window, an auxiliary structure 34 defining the two vertical sides and the upper side of the window is fixed on the upper crosspiece 30.

In a specific embodiment, a single panel 5 serving as a carrier for supporting the accessory members of the door and also incorporating the trimming panel in a single piece on the inner side of the door is mounted on the inner side of the frame 3. However, such characteristic is not essential. The structure 5 is preferably made of fibre-reinforced synthetic material. On the outer side, the door is closed using an outer panel 4 rigidly connected to the frame defined by the element 3 and having a structure made of reinforced synthetic material, or made of metal material or composite material. The panel structure 4 has - therewithin - a honeycomb structure 40 or any other similar deep-meshed structure developing from one face of the panel 4 to the other, configured to absorb impact energy. Such structure allows avoiding the use, in the door of figure 15, of an anti-intrusion reinforcement bar so as to obtain an advantage in terms of weight as well as increasing resistance to impact. In case of lateral impact there occurs an energy absorption distributed over the entire panel 4 while in the conventional solutions the energy is mainly absorbed by the anti-intrusion bar which is located, due to various reasons, only in the lower part of the door. Furthermore, an outer rigid panel transfers the incipient impact signal to the impact sensors more promptly thus allowing a more rapid and efficient intervention of the active safety systems.

The architecture of the door illustrated in figure 15 allows a different door assembly and maintenance method, given that the panel 4 is the last component to be mounted and the maintenance operations on the various accessory members present within the door can be carried out from the outer side of the door, after demounting the panel 4.

Obviously, without prejudice to the principle of the invention, the construction details and the embodiments may widely vary with respect to what has been described and illustrated purely by way of example, without departing from the scope of protection of the present invention.

## Claims

1. Motor-vehicle door, comprising:
- a structure including an inner frame (3) and an outer panel,
- a carrier (5) fixed to the inner frame (3) and carrying a plurality of auxiliary members of the door, and
- a trimming panel (6, 7) which covers the carrier (5) and the inner frame (3) on the inner side of the door,
wherein the carrier (5) is made of fibre-reinforced synthetic material, it is rigidly connected to the inner frame (3) and it is configured to also serve as a structural reinforcement of said inner frame (3).
wherein said carrier (5) has at least one portion (50, 52) exposed to view, not covered by said trimming panel (6, 7) and having a structure and a configuration such to directly serve the function of trimming panel at the exposed portions (50, 52) thereof,
**wherein said door has a pocket formed on the side of the door which is to face towards the inside of the motor-vehicle, said pocket having an inner wall (52) and an outer wall (71) respectively at the inside and at the outside of the door,**
**characterised in that** said carrier (5) has an exposed portion (52) defining **said** inner wall (52) of **said** pocket **and in that said outer wall (71) of the pocket is defined by said trimming panel (7).**

2. Door according to claim 1, **characterised in that** said carrier (5) has an exposed portion (50) defining the inner surface of the door along the lower edge of the window.

## Patentansprüche

1. Kraftfahrzeugtür, umfassend:
- eine Konstruktion, die einen inneren Rahmen (3) und ein äußeres Paneel umfasst,
- einen Träger (5), der an dem inneren Rahmen (3) befestigt ist und eine Vielzahl von Ausstattungselementen der Tür hält, und
- ein Verkleidungspaneel (6, 7), das den Träger (5) und den inneren Rahmen (3) auf der Innenseite der Tür bedeckt,
wobei der Träger (5) aus einem faserverstärkten synthetischen Material besteht, starr mit dem inneren Rahmen (3) verbunden ist und dazu eingerichtet ist, zudem als strukturelle Verstärkung des inneren Rahmens (3) zu dienen,
wobei der Träger (5) wenigstens einen Abschnitt (50, 52) hat, der sichtbar ist, durch das Verkleidungspaneel (6, 7) nicht bedeckt wird und eine Konstruktion sowie eine Konfiguration hat, die derart beschaffen sind, dass er direkt die Funktion des Verkleidungspaneels an den freiliegenden Abschnitten (50, 52) desselben erfüllt,
wobei die Tür eine Tasche aufweist, die an der Seite der Türe ausgebildet ist, die dem Innenraum des Kraftfahrzeugs zugewandt ist, und die Tasche eine Innenwand (52) sowie eine Außenwand (71) an der Innenseite bzw. an der Außenseite der Tür hat,
**dadurch gekennzeichnet, dass** der Träger (5) einen freiliegenden Abschnitt (52) aufweist, der die Innenwand (52) der Tasche bildet, und dadurch, dass die Außenwand (71) der Tasche durch das Verkleidungspaneel (7) gebildet wird.

2. Tür nach Anspruch 1, **dadurch gekennzeichnet, dass** der Träger (5) einen freiliegenden Abschnitt (50), der die Innenfläche der Tür bildet, an dem unteren Rand des Fensters aufweist.

## Revendications

1. Portière de véhicule à moteur, comprenant :
- une structure incluant un cadre intérieur (3) et un panneau extérieur,
- un support (5) fixé sur le cadre intérieur (3) et portant une pluralité d'éléments auxiliaires de la portière, et
- un panneau d'équilibrage (6, 7) qui recouvre le support (5) et le cadre intérieur (3) sur le côté intérieur de la portière,
dans laquelle le support (5) est fabriqué en un matériau synthétique renforcé par des fibres, est relié de manière rigide au cadre intérieur (3) et est configuré pour servir également de renforcement structurel dudit cadre intérieur (3),
dans laquelle ledit support (5) a au moins une partie (50, 52) exposée à la vue, non recouverte par ledit panneau d'équilibrage (6, 7) et ayant une structure et une configuration de sorte à remplir directement la fonction du panneau d'équilibrage sur ses parties exposées (50, 52),
dans laquelle ladite portière a une poche formée sur le côté de la portière qui doit faire face à l'intérieur du véhicule à moteur, ladite poche ayant respectivement une paroi intérieure (52) et une paroi extérieure (71) sur l'intérieur et sur l'extérieur de la portière,
**caractérisée en ce que** ledit support (5) a une partie exposée (52) définissant ladite paroi intérieure (52) de ladite poche et **en ce que** ladite paroi extérieure (71) de la poche est définie par ledit panneau d'équilibrage (7).

2. Portière selon la revendication 1, **caractérisée en ce que** ledit support (5) a une partie exposée (50) définissant la surface intérieure de la portière le long de l'arête inférieure de la fenêtre.
